# EUROPEAN PATENT APPLICATION

(11) **EP 4 603 540 A1**
(43) Date of publication of application: **20.08.2025**
(21) Application number: 23878525.7
(22) Date of filing: 08.03.2023
(51) Int. Cl.: C08L 69/00, C08K 3/34, C08L 25/12, C08K 5/5415, C08K 9/06, C08K 3/22

(54) **POLYCARBONATE ALLOY MATERIAL, PREPARATION METHOD THEREFOR AND USE THEREOF**

(30) Priority: 20.10.2022 CN 202211289058
(71) Applicant: KINGFA SCI. & TECH. CO., LTD., Guangzhou, Guangdong 510663 (CN)
(72) Inventor: CEN, Yin, Guangzhou, Guangdong 510663 (CN); CHEN, Pingxu, Guangzhou, Guangdong 510663 (CN); AI, Junwei, Guangzhou, Guangdong 510663 (CN); YE, Nanbiao, Guangzhou, Guangdong 510663 (CN); WANG, Peitao, Guangzhou, Guangdong 510663 (CN); DONG, Xiangmao, Guangzhou, Guangdong 510663 (CN); ZHANG, Zhiming, Guangzhou, Guangdong 510663 (CN); JIANG, Gangjun, Guangzhou, Guangdong 510663 (CN); DING, Chao, Guangzhou, Guangdong 510663 (CN)
(74) Representative: Petraz, Gilberto Luigi
(86) International application number: PCT/CN2023/080270
(87) International publication number: WO 2024/082521

(57) **Abstract**

The present invention relates to a polycarbonate alloy material, a preparation method therefor and a use thereof. The polycarbonate alloy material includes the following components in parts by weight: 10-99.9 parts of a polycarbonate resin, 5-50 parts of a styrene resin, 0.05-2 parts of a modified metal hydroxide, 1-30 parts of a toughening agent, and 0.01-2 parts of a stabilizer; the modified metal hydroxide is a metal hydroxide subjected to surface treatment with dimethylsiloxane and/or methylphenylsiloxane; and the styrene resin is at least one of a styrene-acrylonitrile copolymer or a styrene-butadiene-styrene copolymer. The polycarbonate alloy material has a low combustion rate as well as excellent mechanical properties and appearance, and can be widely used in fields such as electronic and electrical appliances, transportation, household appliances, and aerospace.

## Description

### TECHNICAL FIELD

The present invention relates to the field of engineering plastics, and more specifically relates to a polycarbonate alloy material, a preparation method therefor and use thereof.

### BACKGROUND

With the development of economy and society, various industries have paid more attention to potential safety hazards. Particularly, the industries, such as electronic and electrical appliances, transportation, household appliances, electric tools, buildings, and aerospace, have increasingly higher requirements for the service safety of materials. For plastics of a non-flame retardant system, decreasing combustion speeds thereof in a fire environment can effectively avoid the generation of the potential safety hazards. Currently, more technical studies have been conducted on a flame retardant system, and still few technical studies have been conducted on the non-flame retardant system.

Polycarbonate alloys are a kind of classic alloys, which are highly universal and have wide applications. To meet the demands of technological updates and changes of such materials in the applications, particularly in different application environments, whether the alloys have sufficient safety has been increasingly concerned currently. Currently, a PC/ABS alloy of the flame retardant system has been highly concerned in improving flame retardant efficiency, thin-wall flame retardants, low smoke and low heat and other technologies. However, during practical applications, the polycarbonate alloys of the non-flame retardant system still have a higher proportion. A patent CN112375362A provides a PC/ABS composition, but a combustion rate of a PC/ABS alloy of the non-flame retardant system is not concerned. When the polycarbonate alloys of the non-flame retardant system are in contact with flames, the combustion speeds thereof are particularly important for the potential safety hazards, particularly in the field of thin-wall applications. Therefore, technical studies need to be conducted on decrease of the combustion rates of the polycarbonate alloys of the non-flame retardant system.

### SUMMARY

A primary purpose of the present invention is to overcome the above problem of lack of studies on existing polycarbonate alloys of a non-flame retardant system, and to provide a polycarbonate alloy material.

A further purpose of the present invention is to provide a method for preparing the above polycarbonate alloy material.

A further purpose of the present invention is to provide use of the above polycarbonate alloy material in preparation of an electronic and electrical product, a communication product, or an automobile vehicle product.

The above purposes of the present invention are achieved through the following technical solutions.

The polycarbonate alloy material includes the following components in parts by weight:
10-99.9 parts of a polycarbonate resin,
5-50 parts of a styrene resin,
0.05-2 parts of a modified metal hydroxide,
1-30 parts of a toughening agent, and
0.01-2 parts of a stabilizer;
the modified metal hydroxide is a metal hydroxide subjected to surface treatment with dimethylsiloxane and/or methylphenylsiloxane;
and the styrene resin is at least one of a styrene-acrylonitrile copolymer or an acrylonitrile-butadiene-styrene copolymer.

The metal hydroxide (e.g., magnesium hydroxide, etc.) is a commonly used flame retardant synergist, which is often compounded with a flame retardant to achieve a better flame retardant effect on the material.

The inventor of the present invention finds that by directly adding the metal hydroxide into a polycarbonate alloy of the non-flame retardant system (without adding the flame retardant), a combustion rate of the polycarbonate alloy cannot be decreased. Possible reasons are that the alkalinity of the metal hydroxide leads to degradation of a metal hydroxide resin, and rapid decrease in molecular weight leads to increase of the combustion rate and also leads to decrease of mechanical properties of the polycarbonate alloy.

The inventor of the present invention finds through several studies that by treating the metal hydroxide with the dimethylsiloxane and/or the methylphenylsiloxane to obtain the modified metal hydroxide and adding the modified metal hydroxide into the polycarbonate alloy material (including a polycarbonate resin/styrene-acrylonitrile copolymer alloy material, a polycarbonate resin/acrylonitrile-butadiene-styrene copolymer alloy material, or a polycarbonate resin/styrene-acrylonitrile copolymer/acrylonitrile-butadiene-styrene copolymer alloy material), the combustion rate of the polycarbonate alloy material can be effectively decreased, and meanwhile, the polycarbonate alloy material is enabled to maintain good mechanical properties (impact strength) and appearance. The reasons are that after the metal hydroxide is subjected to the surface treatment with the dimethylsiloxane and/or the methylphenylsiloxane, on the one hand, an alkaline metal oxide generated by decomposition of the metal hydroxide during combustion can better promote FRIES rearrangement of the polycarbonate resin to achieve a higher carbon formation rate and a higher carbon formation amount and to construct a combustion skeleton with higher strength, thereby effectively decreasing the combustion rate of the polycarbonate alloy material; and on the other hand, a dense coating layer formed by the dimethylsiloxane and/or the methylphenylsiloxane can greatly improve dispersion of the metal hydroxide in a resin matrix to achieve decrease of a use amount while ensuring a better synergistic flame retardant effect and to minimize a destruction effect of a filler on the polycarbonate resin, so that the polycarbonate alloy material is enabled to maintain good mechanical properties and appearance. Moreover, silicon introduced into the system can achieve a synergistic effect with the metal hydroxide to stabilize a combustion state, thereby further decreasing the combustion rate. In addition, moisture generated by the decomposition of the modified metal hydroxide can reduce heat of the polycarbonate alloy material, and can also further decrease the combustion rate to meet requirements for the combustion rate ≤75 mm/min specified in the UL94 standard.

That is, the polycarbonate alloy material of the present invention has a low combustion rate as well as excellent mechanical properties and appearance, and can be widely used in fields such as electronic and electrical appliances, communications, or automobile vehicles.

Preferably, the polycarbonate alloy material includes the following components in parts by weight:
20-85 parts of the polycarbonate resin,
10-45 parts of the styrene resin,
0.1-1.5 parts of the modified metal hydroxide,
5-25 parts of the toughening agent, and
0.05-1.2 parts of the stabilizer.

Preferably, the modified metal hydroxide is the metal hydroxide subjected to the surface treatment with the dimethylsiloxane.

Preferably, the styrene resin is the styrene-acrylonitrile copolymer.

The styrene-acrylonitrile copolymer (compared with the acrylonitrile-butadiene-styrene copolymer) does not contain butadiene rubber, so that the combustion rate of the polycarbonate alloy material can be lower.

More preferably, the styrene-acrylonitrile copolymer has an acrylonitrile content of 28-40 wt%.

Within the acrylonitrile content range, the styrene-acrylonitrile copolymer has better compatibility with the polycarbonate resin, formation of the combustion skeleton is better facilitated, and the combustion rate of the polycarbonate alloy material is lower.

Preferably, the modified metal hydroxide has a silicon content of 1-6 wt%.

Preferably, the polycarbonate resin is a virgin polycarbonate resin and/or a recycled polycarbonate resin.

It should be understood that the virgin polycarbonate resin refers to a polycarbonate resin directly used after polymerization without injection molding or use. The recycled polycarbonate resin refers to a recycled material obtained by classification and collection of a waste polycarbonate resin in accordance with a conventional physical recycling treatment method in the art.

More preferably, the virgin polycarbonate resin has a number-average molecular weight of 22,000-30,000.

More preferably, the recycled polycarbonate resin has a number-average molecular weight of 20,000-25,000, a terminal hydroxyl content of 72-372 ppm and a BPA content of 18-133 ppm.

It should be noted that the terminal hydroxyl content of the recycled polycarbonate resin is measured according to the HG/T 2709-1995 standard; and the BPA content is measured according to the GB/T 32889-2016 standard.

The recycled polycarbonate resin can be selected as the polycarbonate resin of the polycarbonate alloy material of the present invention, which can also achieve the lower combustion rate of the polycarbonate alloy material.

A toughening agent and a stabilizer that are commonly used in the art can be used in the present invention.

Preferably, the toughening agent is a toughening agent with a core-shell structure, a core of the toughening agent with the core-shell structure includes, but is not limited to, silicone rubber, polybutadiene, etc., and a shell includes, but is not limited to, an acrylate, etc.

More preferably, the core of the toughening agent with the core-shell structure is the silicone rubber, and the shell is an acrylate resin.

Further preferably, the core of the toughening agent with the core-shell structure is the silicone rubber, the shell is the acrylate resin, and a silicone rubber content is 6-60 wt%.

Preferably, the metal hydroxide is at least one of magnesium hydroxide, aluminum hydroxide, or calcium hydroxide.

Preferably, a preparation process of the modified metal hydroxide includes: weighing the metal oxide and the dimethylsiloxane and/or the methylphenylsiloxane according to a mass ratio of 1:(0.05-0.6), and adding the same into a powder coating machine for a mixing time of 2-30 min to obtain the modified metal hydroxide.

Preferably, the stabilizer is a hindered phenol antioxidant, including but not limited to, hindered phenol antioxidants 1024, 3114, 1010, 1076, etc.

Preferably, the polycarbonate alloy material may further include 0.01-5 parts of other auxiliary agents.

More preferably, the other auxiliary agents are at least one of a lubricant or a toner.

Optionally, the lubricant is at least one of stearic acid, a stearate, or silicone.

Optionally, the toner is at least one of carbon black, anthraquinone, or titanium yellow.

The method for preparing the above polycarbonate alloy material includes the following steps: mixing the various components, performing melting extrusion, and performing granulation to obtain the polycarbonate alloy material.

Preferably, the preparation method includes the following steps: stirring and mixing the various components in a high-speed mixer, then performing the melting extrusion in a twin-screw extruder, and performing the granulation to obtain a polycarbonate alloy composition.

More preferably, a rotation speed of the stirring and mixing is 20-100 rpm/min; and the twin-screw extruder has a length-diameter ratio of (32-60):1, a screw cylinder temperature of 220-260°C and a screw rod rotation speed of 200-900 rpm/min.

The use of the above polycarbonate alloy material in the preparation of the electronic and electrical product, the communication product, or the automobile vehicle product is also within the scope of protection of the present invention.

Preferably, the electronic and electrical product is an electronic support, an electronic socket, or a charger.

Preferably, the communication product is a mobile phone case, a tablet device, or a portable computer.

Preferably, the automobile vehicle product is an interior trim part, an exterior trim part, or a battery peripheral.

Compared with the prior art, the present invention has the following beneficial effects.

The polycarbonate alloy material of the present invention has a low combustion rate (combustion rate≤75 mm/min) as well as excellent mechanical properties (impact strength>30 KJ/m², and low-temperature impact strength>13 KJ/m²) and appearance (Grade B or above), and can be widely used in fields such as electronic and electrical appliances, transportation, household appliances, and aerospace.

### DETAILED DESCRIPTION OF EMBODIMENTS

To describe the technical solutions of the present invention more clearly and completely, the present invention is further described in detail through specific embodiments below. It is understandable that the specific embodiments described herein are only used to explain the present invention and are not used to limit the present invention, and various changes can be made within the scope limited by the claims of the present invention.

Some reagents used in various embodiments and comparative examples of the present invention are described as follows:
polycarbonate resin (virgin material) 1#: LX1603, Luxi Chemical, with a number-average molecular weight of 30,000;
polycarbonate resin (virgin material) 2#: LX1609, Luxi Chemical, with a number-average molecular weight of 27,100;
polycarbonate resin (virgin material) 3#: LX1920, Luxi Chemical, with a number-average molecular weight of 22,000;
polycarbonate resin (virgin material) 4#: FN1500, Idemitsu, Japan, with a number-average molecular weight of 16,000;
polycarbonate resin (recycled) 1#: PC TJ-20A, Tianju, a plate PCR source, with a number-average molecular weight of 20,000, a terminal hydroxyl content of 372 ppm and a BPA content of 133 ppm;
polycarbonate resin (recycled) 2#: PC ASL-06, Orsel, a bucket PCR source, with a number-average molecular weight of 25,000, a terminal hydroxyl content of 72 ppm and a BPA content of 18 ppm;
styrene resin 1#: a styrene-acrylonitrile copolymer, SAN 310, Kumho, Korea, with an acrylonitrile content of 18 wt%;
styrene resin 2#: a styrene-acrylonitrile copolymer, SAN 2200, Taiwan Formosa Chemicals & Fibre Corporation, with an acrylonitrile content of 28 wt%;
styrene resin 3#: a styrene-acrylonitrile copolymer, SAN 3400, Taiwan Formosa Chemicals & Fibre Corporation, with an acrylonitrile content of 32 wt%;
styrene resin 4#: a styrene-acrylonitrile copolymer, SAN CN40, Styrolution Chemical, with an acrylonitrile content of 40 wt%;
styrene resin 5#: a styrene-butadiene-styrene copolymer, PA 757, with an acrylonitrile content of 28 wt%;
toughening agent 1#: a core-shell toughening agent adopting silicone rubber as a core and an acrylate as a shell, S-2001, Mitsubishi Chemical, with a silicone rubber content of 6 wt%;
toughening agent 2#: a core-shell toughening agent adopting silicone rubber as a core and an acrylate as a shell, S-2030, Mitsubishi Chemical, with a silicone rubber content of 30 wt%;
toughening agent 3#: a core-shell toughening agent adopting silicone rubber as a core and an acrylate as a shell, SX-005, Mitsubishi Chemical, with a silicone rubber content of 60 wt%;
toughening agent 4#: a core-shell toughening agent adopting silicone rubber as a core and an acrylate as a shell, LP8825, with a silicone rubber content of 82 wt%;
toughening agent 5#: a core-shell toughening agent adopting polybutadiene as a core and an acrylate as a shell, M521, Kaneka, Japan;
toughening agent 6#: a non-core-shell toughening agent, MR-01, Kaneka, Japan;
stabilizer: an antioxidant 1076, commercially available;
other auxiliary agents: a lubricant PETS, commercially available;
metal hydroxide 1#: magnesium hydroxide, commercially available;
metal hydroxide 2#: aluminum hydroxide, commercially available;
dimethylsiloxane: 360 MED FLUID, 12500 cst, Dow, United States;
methylphenylsiloxane: IOTA252, 7800cst, Aiyo, Anhui Iota;
modified metal hydroxides: self-made, with a preparation process as follows: weighing a metal oxide and the dimethylsiloxane or the methylphenylsiloxane according to a certain formula proportion, adding the same into a powder coating machine, and performing mixing by setting a mixing time of the powder coating machine as 2-30 min to obtain modified metal hydroxides with different dimethylsiloxane contents. Details are as follows:
modified metal hydroxide 1#: the metal hydroxide is the magnesium hydroxide, an addition amount of the dimethylsiloxane is 10% of a mass of the metal hydroxide, the mixing time is 23 min, and the obtained modified metal hydroxide has a silicon content of 3 wt%;
modified metal hydroxide 2#: the metal hydroxide is the magnesium hydroxide, an addition amount of the dimethylsiloxane is 10% of a mass of the metal hydroxide, the mixing time is 30 min, and the obtained modified metal hydroxide has a silicon content of 6 wt%;
modified metal hydroxide 3#: the metal hydroxide is the magnesium hydroxide, an addition amount of the dimethylsiloxane is 10% of a mass of the metal hydroxide, the mixing time is 12 min, and the obtained modified metal hydroxide has a silicon content of 1 wt%;
modified metal hydroxide 4#: the metal hydroxide is the magnesium hydroxide, an addition amount of the dimethylsiloxane is 10% of a mass of the metal hydroxide, the mixing time is 2 min, and the obtained modified metal hydroxide has a silicon content of 0.5 wt%;
modified metal hydroxide 5#: the metal hydroxide is the aluminum hydroxide, an addition amount of the dimethylsiloxane is 10% of a mass of the metal hydroxide, the mixing time is 23 min, and the obtained modified metal hydroxide has a silicon content of 3 wt%;
modified metal hydroxide 6#: the metal hydroxide is the magnesium hydroxide, an addition amount of the methylphenylsiloxane is 10% of a mass of the metal hydroxide, the mixing time is 23 min, and the obtained modified metal hydroxide has a silicon content of 2.8 wt%.

Unless otherwise specified, various components (e.g., the stabilizer, the other auxiliary agents) selected in various parallel embodiments and comparative examples are identical commercially available products.

Properties of polycarbonate alloy materials provided in various embodiments and comparative examples of the present invention are tested according to the following test methods.

Combustion rate: A flammability test is carried out in accordance with regulations of "UL94-2018, Test for Flammability of Plastic Materials". The flame retardant rating is obtained based on the combustion rate, the extinction time, resistance to dropping and whether droppings are burning. Samples used for testing: The samples have a length of 125 mm and a width of 13 mm, the thickness is selected as 0.8 mm during testing in the present invention, the flame retardant rating of the materials is classified as (UL94-HB) according to regulations of UL94, and the combustion rate (mm/min) at the thickness is obtained by calculation, wherein when the combustion rate is a larger value, the combustion propagation speed is higher; and otherwise, the combustion propagation speed is lower.

Impact strength: The IZOD impact strength at 3.0 mm is tested according to the ASTM D256-2010 standard, adjustment is performed in an environment at room temperature of 25°C and a humidity of 50% for 48 h or above, then testing is carried out, and results are recorded as room-temperature impact strength.

Low-temperature impact strength: The IZOD impact strength at 3.0 mm is tested according to the ASTM D256-2010 standard, adjustment is performed in an environmental regulator with a preset temperature of -30°C for 8 h or above, then testing is carried out, and results are recorded as low-temperature impact strength. A higher test result value indicates better toughness.

Appearance: Square plates with a thickness of 1.0 mm and a side length of 100 mm are formed at a fixed injection molding temperature of 280°C, an injection molding speed of 85% and an injection molding pressure of 85%, and appearance rating is performed by visually inspecting surfaces of 10 pieces of sample plates after continuous injection molding; when all of the 10 pieces are free of any defects, Grade A is obtained; when 1-3 pieces have slight defects such as splashes or silver filaments, Grade B is obtained; when more than 3 pieces have slight defects such as splashes or silver filaments, Grade C is obtained; and when at least 1 piece has serious splashes or silver filaments, Grade D is obtained.

A preparation process of the polycarbonate alloy materials in various embodiments of the present invention and the polycarbonate alloy materials provided in various comparative examples is as follows: after weighing various components according to a proportion, adding the same into a high-speed mixer for stirring and blending to obtain a premix, and then performing extrusion in a twin-screw extruder, followed by a melting granulation process to obtain the polycarbonate alloy materials. A rotation speed of the stirring is 65 rpm/min, and the twin-screw extruder has a length-diameter ratio of 40:1, a screw cylinder temperature of 220-260°C and a screw rod rotation speed of 250-650 rpm/min.

### Embodiments 1-25

Embodiments 1-25 provide a series of polycarbonate alloy materials, with formulas shown in Table 1, Table 2 and Table 3.

**Table 1 Formulas in Embodiments 1-6 (parts by weight)**

| Component | Embodiment | | | | | |
|---|---|---|---|---|---|---|
| | 1 | 2 | 3 | 4 | 5 | 6 |
| Polycarbonate resin (virgin material) 1# | 60 | 99.9 | 10 | 85 | 20 | 60 |
| Styrene resin 1# | 30 | 5 | 50 | 10 | 45 | 30 |
| Toughening agent 1# | 10 | 1 | 30 | 5 | 25 | 10 |
| Modified metal hydroxide 1# | 0.8 | 2 | 0.05 | 1.5 | 0.1 | 0.8 |
| Stabilizer | 0.2 | 0.01 | 2 | 0.05 | 1.2 | 0.2 |
| Other auxiliary agents | 0 | 0 | 0 | 0 | 0 | 2 |

**Table 2 Formulas in Embodiments 7-15 (parts by weight)**

| Component | Embodiment | | | | | | | | |
|---|---|---|---|---|---|---|---|---|---|
| | 7 | 8 | 9 | 10 | 11 | 12 | 13 | 14 | 15 |
| Polycarbonate resin (virgin material) 1# | / | / | / | / | / | 60 | 60 | 60 | 60 |
| Polycarbonate resin (virgin material) 2# | 60 | / | / | / | / | / | / | / | / |
| Polycarbonate resin (virgin material) 3# | / | 60 | / | / | / | / | / | / | / |
| Polycarbonate resin (virgin material) 4# | / | / | 60 | / | / | / | / | / | / |
| Polycarbonate resin (recycled) 1# | / | / | / | 60 | / | / | / | / | / |
| Polycarbonate resin (recycled) 2# | / | / | / | / | 60 | / | / | / | / |
| Styrene resin 1# | 30 | 30 | 30 | 30 | 30 | / | / | / | / |
| Styrene resin 2# | / | / | / | / | / | 30 | / | / | / |
| Styrene resin 3# | / | / | / | / | / | / | 30 | / | / |
| Styrene resin 4# | / | / | / | / | / | / | / | 30 | / |
| Styrene resin 5# | / | / | / | / | / | / | / | / | 30 |
| Toughening agent 1# | 10 | 10 | 10 | 10 | 10 | 10 | 10 | 10 | 10 |
| Modified metal hydroxide 1# | 0.8 | 0.8 | 0.8 | 0.8 | 0.8 | 0.8 | 0.8 | 0.8 | 0.8 |
| Stabilizer | 0.2 | 0.2 | 0.2 | 0.2 | 0.2 | 0.2 | 0.2 | 0.2 | 0.2 |

**Table 3 Formulas in Embodiments 16-25 (parts by weight)**

| Component | Embodiment | | | | | | | | | |
|---|---|---|---|---|---|---|---|---|---|---|
| | 16 | 17 | 18 | 19 | 20 | 21 | 22 | 23 | 24 | 25 |
| Polycarbonate resin (virgin material) 1# | 60 | 60 | 60 | 60 | 60 | 60 | 60 | 60 | 60 | 60 |
| Styrene resin 1# | 30 | 30 | 30 | 30 | 30 | 30 | 30 | 30 | 30 | 30 |
| Toughening agent 1# | / | / | / | / | / | 10 | 10 | 10 | 10 | 10 |
| Toughening agent 2# | 10 | / | / | / | / | / | / | / | / | / |
| Toughening agent 3# | / | 10 | | / | / | / | / | / | / | / |
| Toughening agent 4# | / | / | 10 | / | / | / | / | / | / | / |
| Toughening agent 5# | / | / | / | 10 | | / | / | / | / | / |
| Toughening agent 6# | / | / | / | / | 10 | / | / | / | / | / |
| Modified metal hydroxide 1# | 0. 8 | 0.8 | 0. 8 | 0. 8 | 0.8 | / | / | / | / | / |
| Modified metal hydroxide 2# | / | / | / | / | / | 0. 8 | / | / | / | / |
| Modified metal hydroxide 3# | / | / | / | / | / | / | 0. 8 | / | / | / |
| Modified metal hydroxide 4# | / | / | / | / | / | / | / | 0.8 | / | / |
| Modified metal hydroxide 5# | / | / | / | / | / | / | / | / | 0.8 | / |
| Modified metal hydroxide 6# | / | / | / | / | / | / | / | / | / | 0.8 |
| Stabilizer | 0. 2 | 0.2 | 0. 2 | 0. 2 | 0.2 | 0. 2 | 0. 2 | 0.2 | 0.2 | 0.2 |

### Comparative Example 1

The present comparative example provides a polycarbonate alloy material, which is different from Embodiment 1 in formula that the modified metal hydroxide 1# is not added.

### Comparative Example 2

The present comparative example provides a polycarbonate alloy material, which is different from Embodiment 1 in formula that the modified metal hydroxide 1# is changed into a metal hydroxide 1#.

### Comparative Example 3

The present comparative example provides a polycarbonate alloy material, which is different from Embodiment 1 in formula that the modified metal hydroxide 1# is changed into dimethylsiloxane.

The properties of the polycarbonate alloy materials in various embodiments and comparative examples were tested according to the above-mentioned test methods. Test results are shown in Table 4.

**Table 4 Property test results of polycarbonate alloy materials in various embodiments and comparative examples**

| Test result | Combustion rate (mm/min) | Impact strength (KJ/m²) | low-temperature impact strength (KJ/m²) | Appearance |
|---|---|---|---|---|
| Embodiment 1 | 40 | 60.5 | 44.3 | A |
| Embodiment 2 | 17.5 | 52.1 | 18.2 | A |
| Embodiment 3 | 74.5 | 41.8 | 20.3 | B |
| Embodiment 4 | 23.4 | 58.7 | 33.5 | A |
| Embodiment 5 | 68.9 | 43.2 | 27.3 | A |
| Embodiment 6 | 39 | 59.1 | 40.1 | A |
| Embodiment 7 | 41.2 | 58.7 | 42.1 | A |
| Embodiment 8 | 44.5 | 52.1 | 40.2 | A |
| Embodiment 9 | 52.1 | 38.2 | 13.8 | B |
| Embodiment 10 | 59.8 | 40.7 | 15.2 | B |
| Embodiment 11 | 57.2 | 41.9 | 17.6 | B |
| Embodiment 12 | 39.1 | 52.3 | 30.4 | A |
| Embodiment 13 | 38.7 | 48.7 | 28.9 | A |
| Embodiment 14 | 37.9 | 32.1 | 27.4 | B |
| Embodiment 15 | 65.4 | 38.2 | 39.9 | B |
| Embodiment 16 | 39.3 | 53.2 | 40.3 | B |
| Embodiment 17 | 41.5 | 48.7 | 41.2 | A |
| Embodiment 18 | 54.3 | 44.5 | 38.7 | A |
| Embodiment 19 | 68.3 | 52.1 | 41.3 | B |
| Embodiment 20 | 74.7 | 50.3 | 42.1 | B |
| Embodiment 21 | 38.7 | 58.9 | 41.3 | A |
| Embodiment 22 | 42.4 | 50.5 | 38.9 | A |
| Embodiment 23 | 58.9 | 30.5 | 24.3 | B |
| Embodiment 24 | 43.2 | 50.5 | 38.7 | A |
| Embodiment 25 | 41.6 | 58.7 | 42.8 | A |
| Comparative Example 1 | 78.9 | 60.5 | 44.3 | A |
| Comparative Example 2 | 92.3 | 12.3 | 2.3 | D |
| Comparative Example 3 | 89.7 | 27.3 | 12.4 | C |

As can be seen from Table 4, the polycarbonate alloy materials in Embodiments 1-25 have a low combustion rate to meet requirements for the combustion rate≤75 mm/min specified in the UL94 standard, and have excellent mechanical properties and appearance.

As can be seen from comparison of Embodiments 1-5, the use amounts of various components have a certain impact on the combustion rate, the impact strength, the low-temperature impact strength and the appearance. Specifically, since a polycarbonate has a greater impact on the combustion rate, the combustion rate of a slow-combustion polycarbonate composite material is lower when the use amount of the polycarbonate is larger in a certain range, so that the combustion rate in Embodiment 2 is lower than that in Embodiment 4, and the combustion rate in Embodiment 5 is lower than that in Embodiment 3. In addition to an impact of the polycarbonate and the modified metal hydroxide, the use amounts of other components also have a certain impact on the impact strength and the low-temperature impact strength. Under comprehensive regulation and control of the various component, the impact strength and the low-temperature impact strength in Embodiment 1 are the best, the impact strength and the low-temperature impact strength in Embodiment 4 are better than the impact strength and the low-temperature impact strength in Embodiment 2, respectively, and the impact strength and the low-temperature impact strength in Embodiment 5 are better than the impact strength and the low-temperature impact strength in Embodiment 3, respectively.

As can be seen from Embodiment 1 and Embodiments 12-14, when the styrene-acrylonitrile copolymer has a higher acrylonitrile content, the combustion rate of the obtained polycarbonate alloy material is lower. As can be seen from Embodiments 12 and 15, compared with the selection of the styrene-butadiene-styrene copolymer (Embodiment 15), the combustion rate of the polycarbonate alloy material obtained by selecting the styrene-acrylonitrile copolymer (Embodiment 12) is lower.

As can be seen from Embodiments 1, 16, 17 and 18, when the silicon content of the toughening agent is within an appropriate range (6-60 wt%), the combustion rate of the obtained polycarbonate alloy material is lower. Compared with the selection of the core-shell toughening agent adopting the polybutadiene as the core (e.g., Embodiment 19), the combustion rate of the polycarbonate alloy material obtained by selecting the core-shell toughening agent adopting the silicone rubber as the core is lower. Compared with the non-core-shell toughening agent (e.g., Embodiment 20), the combustion rate of the polycarbonate alloy material obtained by selecting the core-shell toughening agent is lower.

As can be seen from Embodiments 1 and 21-23, when the silicon content of the modified metal hydroxide is higher (Embodiments 1, 21 and 22), the combustion rate of the polycarbonate alloy material obtained is lower. As can be seen from Embodiment 1 and Embodiment 24, compared with the selection of the aluminum hydroxide (Embodiment 24), the combustion rate of the polycarbonate alloy material obtained by selecting the magnesium hydroxide (Embodiment 1) as the metal hydroxide is lower.

In Comparative Example 1, the combustion rate of the polycarbonate alloy material obtained by not adding the modified metal hydroxide is higher. In Comparative Example 2, the polycarbonate alloy material obtained by directly adding the metal hydroxide has a higher combustion rate, a lower appearance grade and lower impact strength and low-temperature impact strength. In Comparative Example 3, the polycarbonate alloy material obtained by directly adding the dimethylsiloxane has a higher combustion rate, a lower appearance grade and lower impact strength and low-temperature impact strength.

Obviously, the above embodiments of the present invention are only instances for clearly illustrating the present invention and are not limitations of the implementation of the present invention. For those of ordinary skill in the art, other changes or alternations in different forms can also be made on the basis of the above description. It is not necessary and possible to list all of the embodiments herein. Any modifications, equivalent substitutions, improvements and the like made within the spirit and principles of the present invention shall be included in the scope of protection of the claims of the present invention.

## Claims

1. A polycarbonate alloy material, **characterized in that** the polycarbonate alloy material comprises the following components in parts by weight:
10-99.9 parts of a polycarbonate resin,
5-50 parts of a styrene resin,
0.05-2 parts of a modified metal hydroxide,
1-30 parts of a toughening agent, and
0.01-2 parts of a stabilizer;
the modified metal hydroxide is a metal hydroxide subjected to surface treatment with dimethylsiloxane and/or methylphenylsiloxane;
and the styrene resin is at least one of a styrene-acrylonitrile copolymer or a styrene-butadiene-styrene copolymer.

2. The polycarbonate alloy material according to claim 1, **characterized in that** the styrene resin is the styrene-acrylonitrile copolymer.

3. The polycarbonate alloy material according to claim 2, **characterized in that** the styrene-acrylonitrile copolymer has an acrylonitrile content of 28 wt% - 40 wt%.

4. The polycarbonate alloy material according to claim 1, **characterized in that** the modified metal hydroxide has a silicon content of 1 wt% - 6 wt%.

5. The polycarbonate alloy material according to claim 1, **characterized in that** the polycarbonate resin is a virgin polycarbonate resin and/or a recycled polycarbonate resin,

6. The polycarbonate alloy material according to claim 5, **characterized in that** the virgin polycarbonate resin has a number-average molecular weight of 22,000-30,000.

7. The polycarbonate alloy material according to claim 1, **characterized in that** the toughening agent is a toughening agent with a core-shell structure.

8. The polycarbonate alloy material according to claim 1, **characterized in that** the metal hydroxide is at least one of magnesium hydroxide, aluminum hydroxide, or calcium hydroxide.

9. A method for preparing the polycarbonate alloy material according to any one of claims 1-8, **characterized in that** the method comprises the following steps: mixing the various components, performing melting extrusion, and performing granulation to obtain the polycarbonate alloy material.

10. Use of the polycarbonate alloy material according to any one of claims 1-8 in preparation of an electronic and electrical product, a communication product, or an automobile vehicle product.
